# EUROPÄISCHE PATENTSCHRIFT

(11) **EP 1 892 379 B1**
(45) Veröffentlichungstag und Bekanntmachung des Hinweises auf die Patenterteilung: **18.11.2015**
(21) Anmeldenummer: 06017046.1
(22) Anmeldetag: 16.08.2006
(51) Int. Cl.: F01D 5/26, F16F 15/14, F01D 25/04, F01D 5/10

(54) **Rotor für eine Strömungsmaschine**
Rotor for a turbomachine
Rotor pour une turbomachine

(43) Veröffentlichungstag der Anmeldung: 27.02.2008
(73) Patentinhaber: Siemens Aktiengesellschaft, 80333 München (DE)
(72) Erfinder: Richter, Christoph, 49477 Ibbenbüren (DE)

(56) Entgegenhaltungen:
- EP-A- 1 270 901
- DE-A1- 10 202 995
- US-A1- 5 924 845

## Beschreibung

Die Erfindung betrifft einen Rotor für eine Strömungsmaschine, wobei der Rotor ein Schwingungsreduktionsmittel aufweist, das derart ausgebildet ist, dass es im Betrieb der Strömungsmaschine auftauchende Schwingungen des Rotors dämpft.

Aus der DE 102 02 995 A ist ein Schwingungsreduktionsmittel bekannt, das in einem Rotorblatt angeordnet ist.

Die Wellen von Generatoren sind in der Regel mit Antriebseinheiten wie z. B. Dampfturbinen oder Gasturbinen rotatorisch verbunden. Die Frequenz der Generatorwellen liegt bei 50 bzw. 60 Hertz. Allerdings erfahren die Generatorwellenstränge rotatorische Schwingungsanregungen über den Generator. In der Regel gilt, dass bei vierpoligen und zweipoligen Generatoren des Schwermaschinenbaus im sog. halb- bzw. volltourigen Betrieb sich als anregende Frequenz immer das Doppelte der elektrischen Netzfrequenz ergibt. Die dabei auftretenden Rotorstrangschwindungen und die Amplituden sind unter Umständen sehr schädlich für die Rotorwelle und auch für die daran angebundenen Turbinenschaufeln, wenn die auftretenden Amplituden bestimmte Werte überschreiten.

Um Rotorschwingungen mit zu großen Amplituden zu vermeiden, werden diese durch Massen und/oder Torsionssteifigkeitsverteilungen entlang des Rotors abgestimmt. Das bedeutet, dass die Wellen derart ausgebildet werden, dass an zugänglichen Stellen Massen angebracht oder entfernt werden. Durch diese Maßnahmen lassen sich allerdings nicht alle Schwingungen vermeiden.

Die Erfindung hat es sich daher zur Aufgabe gemacht, einen Rotor anzubieten, bei dem störende Schwingungen wirksam vermindert werden können.

Die Aufgabe wird gelöst durch einen Rotor für eine Strömungsmaschine, wobei der Rotor ein Schwingungsreduktionsmittel aufweist, das derart ausgebildet ist, dass es im Betrieb der Strömungsmaschine auftauchende Schwingungen des Rotors dämpft.

Das Schwingungsreduktionsmittel weist hierbei ein Gehäuse auf, wobei im Inneren des Gehäuses eine Laufbahnoberfläche ausgebildet ist, wobei das Schwingungsreduktionsmittel im Gehäuse einen Rollkörper umfasst, der auf der Laufbahnoberfläche bewegbar angeordnet ist, wobei das Gehäuse 3 auf ein an dem Rotor 1 angeordneten Grundkörper 10 aufgeschraubt ist. Die Erfindung geht von dem Aspekt aus, dass auf einer Rotoroberfläche ein Schwingungsreduktionsmittel einfach und schnell angebracht werden kann. Das Schwingungsreduktionsmittel ist hierbei mit einem Rollkörper ausgebildet, der einer Schwingung der Rotoroberfläche entgegenwirkt. Das Entgegenwirken wird durch das Vorhandensein der Trägheit des Rollkörpers erreicht.

Der Rollkörper ist in einer bevorzugten Ausführungsform eine Kugel oder ein Zylinder. Gerade diese Ausführungsformen sind einfach in der Herstellung, wodurch das Schwingungsreduktionsmittel günstig und preiswert ist.

Die Laufbahnoberfläche ist vorzugsweise gekrümmt, wodurch sich verschiedene Frequenzen des Schwingungsreduktionsmittels einstellen lassen.

Vorzugsweise ist die Laufbahnoberfläche konvex bezüglich der Rotationsachse des Rotors gekrümmt.

Vorteilhaft ist in dem Gehäuse eine Flüssigkeit enthalten, wodurch die Dämpfung des Rollkörpers erhöht wird. In einer bevorzugten Ausführungsform weist das Schwingungsreduktionsmittel ein Pendel auf, wobei das Pendel eine an einem Schwingungsarm angeordneten Schwingungsmasse aufweist, wobei der Schwingungsarm drehbar angeordnet ist.

Der Schwingungsarm ist hierbei um einen Drehpunkt drehbar gelagert.

Ausführungsbeispiele der Erfindung werden anhand der Zeichnung noch näher erläutert. Gleichwirkende Teile haben die gleichen Bezugszeichen.

Es zeigen:
- Figur 1: eine Schnittdarstellung eines Rotors mit einem Schwingungsreduktionsmittel
- Figur 2: eine Schnittdarstellung eines Rotors mit einem alternativen Schwingungsreduktionsmittel.

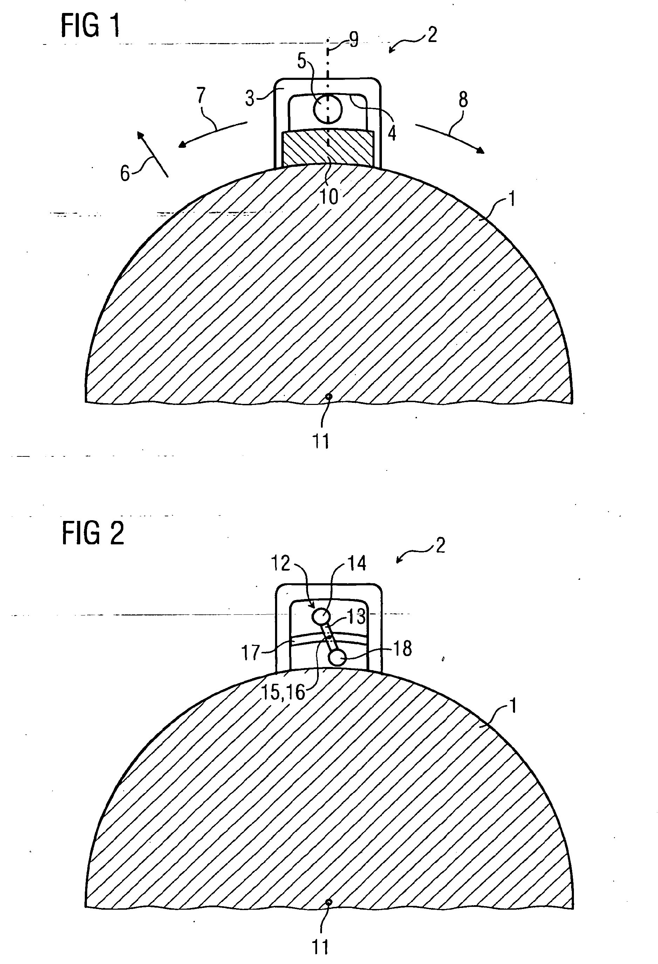

In der Figur 1 ist eine Schnittdarstellung eines Rotors 1 mit einem Schwingungsreduktionsmittel 2 dargestellt. Das Schwingungsreduktionsmittel 2 weist ein Gehäuse 3 auf und ist derart ausgebildet, dass es in Betrieb der Strömungsmaschine auftauchende Schwingungen des Rotors 1 dämpft. Der Rotor 1 kann in einer Strömungsmaschine, die nicht näher dargestellt ist, angeordnet werden.

Im Innern des Gehäuses 3 ist eine Laufbahnoberfläche 4 ausgebildet, wobei das Schwingungsreduktionsmittel 2 im Gehäuse 3 einen Rollkörper 5 umfasst, der auf der Laufbahnoberfläche 4 bewegbar angeordnet ist.

Im Betrieb wirkt eine Fliehkraft in radialer Richtung 6 und drückt sozusagen den Rollkörper 5 gegen die Laufbahnoberfläche 4. Bei einer konstanten Drehgeschwindigkeit befindet sich der Rollkörper 5 in einer Ruhelage und verändert seine Position in Bezug auf die Laufbahnoberfläche 4 nicht. Ist hingegen die Drehgeschwindigkeit des Rotors 1 nicht konstant, sondern mit einer harmonischen Störfunktion überlagert, führt das zu einer Anregung des Rollkörpers 5, der schließlich zu einer Bewegung auf der Laufbahnoberfläche 4 führt. Aufgrund der Trägheit bewirkt eine Bewegung des Rotors in einer Drehrichtung 7 eine Bewegung in Gegenrichtung 8.

Der Rollkörper 5 ist hierbei entweder als Kugel oder als Zylinder ausgebildet.

Die Laufbahnoberfläche 4 ist gekrümmt ausgebildet, so dass der Rollkörper 5 eine Rückstellkraft in Richtung der Ruhelage 9 erfährt. Die Neigung der Laufbahnoberfläche 4 hat einen Einfluss auf die Rückstellkraft auf den Rollkörper 5. Die Dämpfung des Rollkörpers 5 wird verstärkt, indem im Gehäuse 3 des Schwingungsreduktionsmittels 2 eine Flüssigkeit, wie z. B. Öl oder eine tribulogische Flüssigkeit angeordnet ist.

Die Laufbahnoberfläche 4 kann bezüglich der Rotationsachse 11 des Rotors gekrümmt ausgebildet sein.

Ein nicht zur Erfindung gehörendes Schwingungsreduktionsmittels 2 ist in der Figur 2 zu sehen. Das Schwingungsreduktionsmittel 2 weist ein Pendel 12 auf. Das Schwingungsreduktionsmittel 2 ist derart ausgebildet, dass es im Betrieb der Strömungsmaschine auftauchende Schwingungen des Rotors 1 dämpft. Dafür weist das Pendel 12 eine an einem Schwingungsarm 13 angeordnete Schwingungsmasse 14 auf, wobei der Schwingungsarm 13 drehbar angeordnet ist. Der Schwingungsarm 13 ist hierbei um einen Drehpunkt 15 oder einer Schwingungsachse 16 drehbar angeordnet. Der Schwingungsarm wird an einem Element 17 angeordnet.

In der in Figur 2 dargestellten Ausführungsform des Schwingungsreduktionsmittels 2 umfasst der Schwingungsarm 13 darüber hinaus einen Rollkörper 18, der an einem Ende des Schwingungsarms 13 angeordnet ist. Dieser Rollkörper 18 ist entlang einer Laufbahn bewegbar, wobei die Laufbahn konvex bezüglich der Rotationsachse des Rotors 1 gekrümmt ausgebildet sein kann.

## Patentansprüche

1. Rotor (1) für eine Strömungsmaschine,
wobei der Rotor (1) ein Schwingungsreduktionsmittel (2) aufweist,
das derart ausgebildet ist,
dass es im Betrieb der Strömungsmaschine auftauchende Schwingungen des Rotors (1) dämpft,
wobei das Schwingungsreduktionsmittel (2) ein Gehäuse (3) aufweist,
wobei im Inneren des Gehäuses (3) eine Laufbähnoberfläche (4) ausgebildet ist,
wobei das Schwingungsreduktionsmittel (2) im Gehäuse einen Rollkörper (5) umfasst,
der auf der Laufbahnoberfläche (4) bewegbar angeordnet ist, **dadurch gekennzeichnet dass** das Gehäuse (3) auf einem an dem Rotor (1) angeordneten Grundkörper (10) aufgeschraubt ist.

2. Rotor (1) nach Anspruch 1,
wobei der Rollkörper (5) eine Kugel ist.

3. Rotor (1) nach Anspruch 1,
wobei der Rollkörper (5) ein Zylinder ist.

4. Rotor (1) nach Anspruch 1,
wobei die Laufbahnoberfläche (4) gekrümmt ist.

5. Rotor (1) nach Anspruch 1,
wobei die Laufbahnoberfläche (4) konvex bezüglich der Rotationsachse des Rotors (1) gekrümmt ist.

6. Rotor (1) nach Anspruch 1, 2, 3, 4 oder 5,
wobei in dem Gehäuse (3) eine Flüssigkeit enthalten ist.

## Claims

1. Rotor (1) for a turbomachine,
wherein the rotor (1) has a vibration reduction device (2), which is formed in such a way that it damps vibrations of the rotor (1) which emerge during operation of the turbomachine,
wherein the vibration reduction device (2) has a housing (3),
wherein a track surface (4) is formed inside the housing (3),
wherein the vibration reduction device (2) comprises a rolling body (5) in the housing,
which rolling body is arranged with capability of movement on the track surface (4),
**characterized in that**
the housing (3) is screwed onto a basic body (10) which is arranged on the rotor (1).

2. Rotor (1) according to Claim 1,
wherein the rolling body (5) is a ball.

3. Rotor (1) according to Claim 1,
wherein the rolling body (5) is a cylinder.

4. Rotor (1) according to Claim 1,
wherein the track surface (4) is curved.

5. Rotor (1) according to Claim 1,
wherein the track surface (4) is convexly curved with regard to the rotational axis of the rotor (1).

6. Rotor (1) according to Claim 1, 2, 3, 4 or 5,
wherein a fluid is contained in the housing (3).

## Revendications

1. Rotor pour une turbomachine,
le rotor (1) ayant un moyen (2) de réduction des vibrations,
qui est constitué de manière
à amortir des vibrations du rotor (1) se produisant lorsque la turbomachine fonctionne,
dans laquelle le moyen (2) de réduction des vibrations a une enveloppe (3),
dans lequel une surface (4) de roulement est constituée à l'intérieur de l'enveloppe (3),
dans lequel le moyen (2) de réduction des vibrations comprend dans l'enveloppe une pièce (5) de roulement,
qui est montée mobile sur la surface (4) de roulement, **caractérisé en ce que**
l'enveloppe (3) est vissée sur une pièce (10) de base montée sur le rotor (1).

2. Rotor (1) suivant la revendication 1,
dans lequel la pièce (5) de roulement est une bille.

3. Rotor (1) suivant la revendication 1,
dans lequel la pièce (5) de roulement est un cylindre.

4. Rotor (1) suivant la revendication 1,
dans lequel la surface (4) de roulement est incurvée.

5. Rotor (1) suivant la revendication 1,
dans lequel la surface (4) de roulement est convexe par rapport à l'axe de révolution du rotor (1).

6. Rotor (1) suivant la revendication 1, 2, 3, 4, ou 5
dans lequel un liquide est contenu dans l'enveloppe (3).
